# EUROPEAN PATENT APPLICATION

(11) **EP 3 537 752 A1**
(43) Date of publication of application: **11.09.2019**
(21) Application number: 17866513.9
(22) Date of filing: 31.10.2017
(51) Int. Cl.: H04W 16/28, H04B 7/04, H04B 7/10, H04J 99/00, H04W 88/02

(54) **DEVICE AND RADIO COMMUNICATION METHOD**

(30) Priority: 01.11.2016 JP 2016214689
(71) Applicant: NTT DOCOMO, INC., Chiyoda-ku Tokyo 100-6150 (JP)
(72) Inventor: OSAWA, Ryosuke, Tokyo 100-6150 (JP); HARADA, Hiroki, Tokyo 100-6150 (JP); KAKISHIMA, Yuichi, Palo Alto California 94304 (US)
(74) Representative: Hoffmann Eitle
(86) International application number: PCT/JP2017/039284
(87) International publication number: WO 2018/084135

(57) **Abstract**

To suppress deterioration of reception quality also in the case of using beam forming in both transmission and reception, an apparatus according to one aspect of the present invention is characterized by having a receiving section that receives beam identification information indicative of a transmission beam, and a control section that determines a reception beam based on a received reference signal, where the control section acquires a first indicator about a match between the transmission beam and the reception beam.

## Description

### Technical Field

The present invention relates to an apparatus and radio communication method in the next-generation mobile communication system.

### Background Art

In UMTS (Universal Mobile Telecommunications System) networks, for the purpose of higher data rates, low delay and the like, Long Term Evolution (LTE) has been specified (Non-patent Document 1). Further, for the purpose of wider bands and higher speed than LTE (also referred to as LTE Rel.8 or 9), LTE-A (LTE-Advanced, also referred to as LTE Rel.10, 11 or 12) has been specified, and successor systems (e.g., also referred to as FRA (Future Radio Access), 5G (5th generation mobile communication system), NR (New Radio), NX (New radio access), FX (Future generation radio access), LTE Rel.13, 14 or 15 onward, etc.) to LTE have also been studied.

In LTE Rel.10/11, in order to widen the band, introduced is Carrier Aggregation (CA) for aggregating a plurality of component carriers (CC: Component Carrier). Each CC is configured with a system band of LTE Rel.8 as one unit. Further, in CA, a plurality of CCs of the same base station (e.g., called eNB (eNodeB), BS (Base Station), etc.) is configured for a user terminal (UE: User Equipment).

On the other hand, in LTE Rel.12, Dual Connectivity (DC) is also introduced where a plurality of cell groups (CG: Cell Group) of different radio base stations is configured for a UE. Each cell group is comprised of at least a single cell (CC). In DC, since a plurality of CCs of different radio base stations is aggregated, DC is also called inter-base station CA (Inter-eNB CA) and the like.

Further, in LTE Rel. 8-12, introduced is Frequency Division Duplex (FDD) for performing downlink (DL) transmission and uplink (UL) transmission in different frequency bands, and Time Division Duplex (TDD) for switching between downlink transmission and uplink transmission temporally in the same frequency band to perform.

### Citation List

### Non-patent Document

[Non-patent Document 1] 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (e.g., 5G, NR), it is expected to actualize various radio communication services so as to meet respective different requirements (e.g., ultra-high speed, high capacity, ultra-low delay, etc.).

For example, in 5G/NR, it is studied to offer radio communication services called eMBB (enhanced Mobile Broad Band), loT (Internet of Things), mMTC (massive Machine Type Communication), M2M (Machine to Machine), URLLC (Ultra Reliable and Low Latency Communications) and the like.

In 5G/NR, for the primary purpose of reducing difficulty in securing coverage associated with increases in carrier frequency, and decreasing radio wave propagation loss, it is studied to use beam forming (BF) in both transmission and reception.

However, in the case of determining a transmission beam using the existing beam determining method, there is the risk that the determined beam is not a proper beam for the transmission party. When transmission is performed using a beam that is not proper, problems occur such as decreases in communication throughput, deterioration of reception quality and the like.

The present invention was made in view of such a respect, and it is an object of the invention to provide an apparatus and radio communication method capable of suppressing deterioration of reception quality, also in the case of using beam forming in both transmission and reception.

### Solution to Problem

An apparatus according to one aspect of the present invention is characterized by having a receiving section that receives beam identification information indicative of a transmission beam, and a control section that determines a reception beam based on a received reference signal, where the control section acquires a first indicator about a match between the transmission beam and the reception beam.

### Advantageous Effects of Invention

According to the present invention, also in the case of using beam forming in both transmission and reception, it is possible to suppress deterioration of reception quality.

### Brief Description of Drawings

FIGs. 1A to 1C are diagrams showing one example of determining an uplink transmission beam using a received signal of a downlink reference signal;
FIGs. 2A to 2C are diagrams showing one example of determining a downlink transmission beam using a received signal of an uplink reference signal;
FIG. 3 is a diagram showing one example of problems with beam determination in the case where uplink and downlink interference is asymmetrical;
FIGs. 4A and 4B are diagrams showing one example of the case where reception beams are different from transmission beams on the reception side;
FIG. 5 is a diagram showing one example of a flow of correspondence determination according to Embodiment 1;
FIGs. 6A and 6B are diagrams showing one example of flows of beam control according to Embodiment 2;
FIG. 7 is a diagram showing one example of a schematic configuration of a radio communication system according to one Embodiment of the present invention;
FIG. 8 is a diagram showing one example of an entire configuration of a radio base station according to one Embodiment of the invention;
FIG. 9 is a diagram showing one example of a function configuration of the radio base station according to one Embodiment of the invention;
FIG. 10 is a diagram showing one example of an entire configuration of a user terminal according to one Embodiment of the invention;
FIG. 11 is a diagram showing one example of a function configuration of the user terminal according to one Embodiment of the invention; and
FIG. 12 is a diagram showing one example of hardware configurations of the radio base station and user terminal according to one Embodiment of the invention.

### Description of Embodiments

In 5G/NR, for the primary purpose of reducing difficulty in securing coverage associated with increases in carrier frequency, and decreasing radio wave propagation loss, it is studied to use beam forming (BF) in both transmission and reception. For example, the BF is techniques for controlling (also called precoding) the amplitude and/or phase of a signal transmitted/received to/from each element by using an ultra-multi-element antenna, and thereby forming a beam (antenna directivity). In addition, MIMO (Multiple Input Multiple Output) using such an ultra-multi-element antenna is also called Massive MIMO.

It is possible to classify BF into digital BF and analog BF. The digital BF is a method of performing precoding signal processing (on a digital signal) on baseband. In this case, parallel processing of Inverse Fast Fourier Transform (IFFT)/Digital to Analog Converter (DAC)/RF (Radio Frequency) is required corresponding to the number of antenna ports (RF chains). On the other hand, at any timing, it is possible to form the number of beams corresponding to the number of RF chains.

The analog BF is a method using a phase shift device on RF. In this case, since the phase of an RF signal is only rotated, the configuration is easy and is capable of being actualized at low cost, but it is not possible to form a plurality of beams at the same timing.

In addition, it is also possible to actualize a hybrid BF configuration with the digital BF and analog BF combined. In the future radio communication system (e.g., 5G), it is studied to introduce massive MIMO, but when beam forming with the enormous number of beams is performed only by the digital BF, the circuit configuration is expensive. Therefore, in 5G, it is expected to use the hybrid BF configuration.

In addition, in order to perform proper precoding (e.g., use a precoding weight to improve SINR (Signal to Interference plus Noise Ratio) on the reception side), it is necessary that the transmission side makes proper phase and amplitude adjustments, based on the propagation path information of from the transmission side to the reception side. Uplink propagation path information is important for transmission beam forming of a UE, and downlink propagation path information is important for transmission beam forming of a base station.

For example, the propagation path information is channel state information (CSI), information on channel characteristics and/or channel matrix, and the like. In addition, the propagation path information may include transmitter/receiver characteristics of the UE and BS, phase and/or amplitude adjustment results for beam forming and the like. Herein, for example, the transmitter/receiver characteristics refer to frequency characteristics (e.g., phase and/or amplitude characteristics) of the transmitter/receiver.

In addition, the propagation path information may be at least one of a precoding matrix indicator (PMI), precoding type indicator (PTI), rank indicator (RI) and the like. In addition, the PMI determined by the base station may be called TPMI (Transmitted PMI).

In existing LTE, the reception side estimates (measures) CSI based on a reference signal (RS), and transmits the CSI to the transmission side as feedback, and the transmission side acquires propagation path information, without directly estimating the propagation path, and is thereby capable of determining a transmission beam.

Further, in the case where correspondence (also referred to as reciprocity) exists between the uplink propagation path and the downlink propagation path, using a propagation path estimation result of one direction, it is possible to determine a transmission beam of the other direction. For example, in the case of performing uplink and downlink communication using TDD, it is considered that these propagation paths have reciprocity. In the case where a plurality of propagation paths has reciprocity, these propagation paths may be regarded as having channel reciprocity.

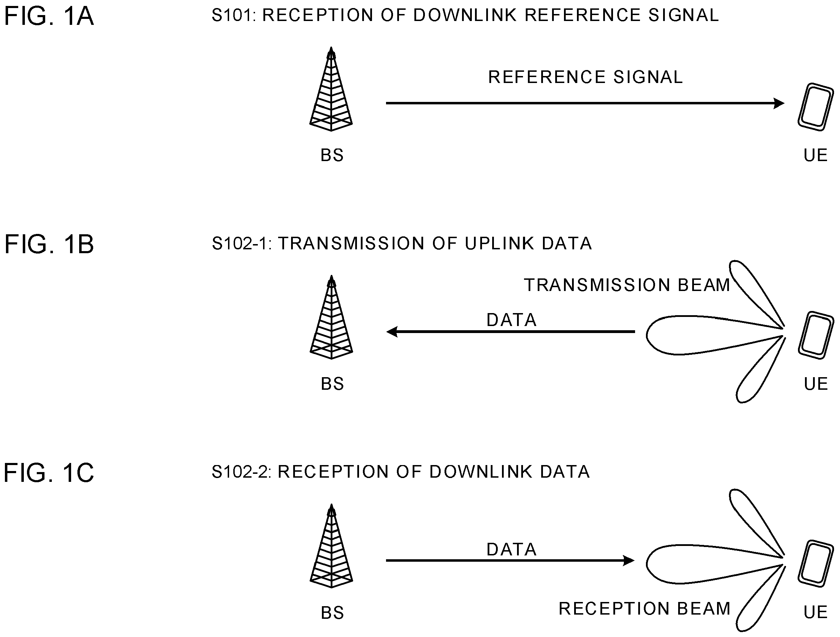

FIG. 1 contains diagrams showing one example of determining an uplink transmission beam using a received signal of a downlink reference signal. The UE receives a downlink reference signal transmitted from the BS (may be Transmission/Reception Point (TRP)), and the based on the downlink reference signal, performs channel estimation and the like to derive downlink propagation path information (S101). The downlink reference signal may be Cell-specific Information-Reference Signal (CRS), Channel State Information-Reference Signal (CSI-RS) and the like, or may be a differently defined reference signal (e.g., Beam-specific Reference Signal (varying with beam) specific to the beam).

In addition, the UE may beforehand be notified of the information on the reference signal (e.g., information on resources used in transmission of the downlink reference signal) by higher layer signaling (e.g., RRC (Radio Resource Control) signaling, broadcast information (MIB (Master Information Block), SIB (System Information Block), etc.), physical layer signaling (e.g., downlink control information (DCI)), or combination thereof.

The UE forms a transmission beam based on the downlink propagation path information, and may transmit a UL signal (e.g., UL data signal) (step S102-1). Further, the UE forms a reception beam based on the downlink propagation path information, and may receive a DL signal (e.g., DL data signal) (step S102-2).

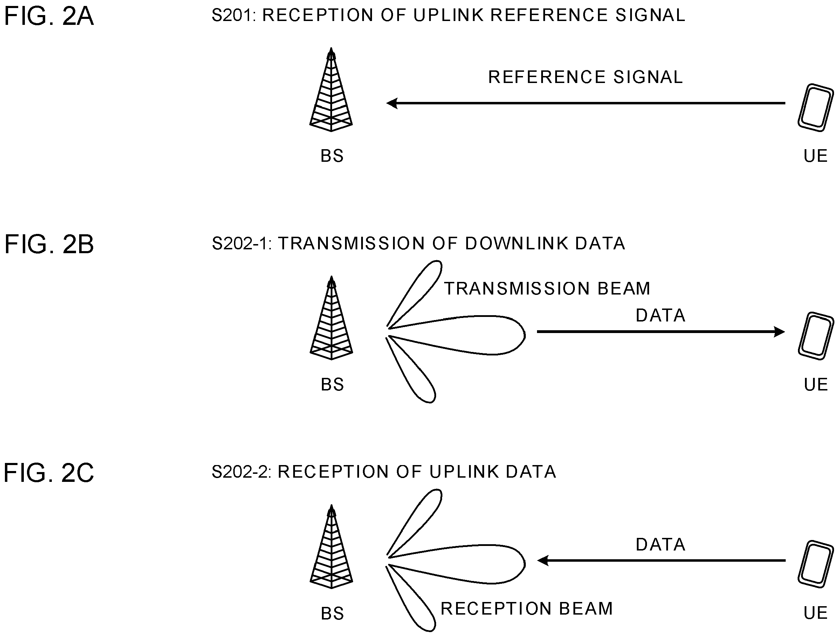

FIG. 2 contains diagrams showing one example of determining a downlink transmission beam using a received signal of an uplink reference signal. The BS receives an uplink reference signal transmitted from the UE, and based on the uplink reference signal, performs channel estimation and the like to derive uplink propagation path information (S201). The uplink reference signal may be a reference signal for channel measurement (e.g., Sounding Reference Signal (SRS)), or may be a differently defined reference signal (e.g., BRS).

The BS forms a transmission beam based on the uplink propagation path information, and may transmit a DL signal (e.g., DL data signal) (step S202-1). Further, the BS forms a reception beam based on the uplink propagation path information, and may receive a UL signal (e.g., UL data signal) (step S202-2).

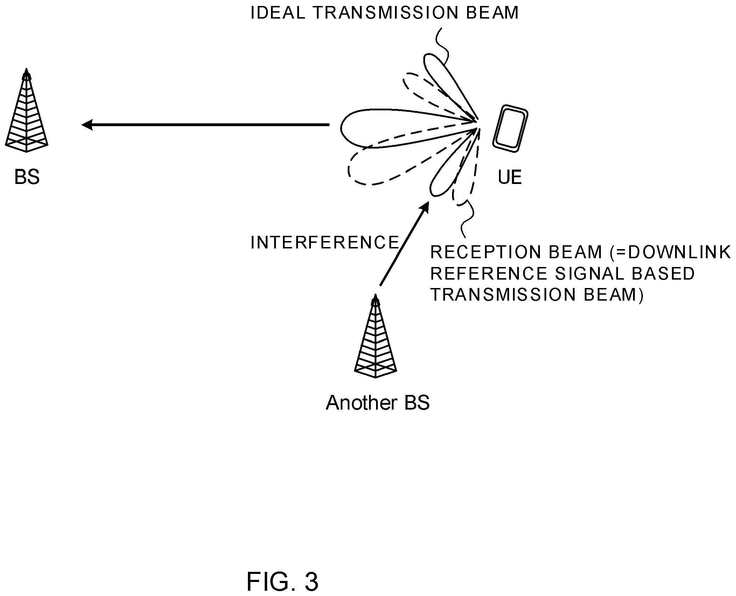

However, also when the uplink propagation path and downlink propagation path have reciprocity, there is the case where the beam (e.g., reception beam) determined based on the received reference signal is not proper as a transmission beam. One example will be described Using FIG. 3.

FIG. 3 is a diagram showing one example of problems with beam determination in the case where uplink and downlink interference is asymmetrical. In FIG. 3, uplink and downlink propagation paths have reciprocity between the BS and the UE. On the other hand, it is assumed that the UE undergoes interference on the received signal, due to a signal transmitted from another base station (Another BS).

As an ideal transmission beam from the UE to the BS, such a beam is preferable that the maximum directivity is directed in the BS direction. In addition, in circumstances in FIG. 3, when step S101 described in FIG. 1 is performed, the UE attempts to maximize the SINR of the reference signal from the BS, in consideration of the interfering signal from another base station. Therefore, the reception beam (e.g., transmission beam determined by reciprocity based on the downlink reference signal) determined based on the downlink reference signal is different in beam shape and/or direction from the ideal transmission beam.

Further, also in the case where calibration of the phase and/or amplitude characteristics of the transmitter/receiver is not acquired, a case may occur where the transmission beam determined by reciprocity based on the downlink reference signal is not proper. The downlink reference signal passes through the receiver of the UE, but data to which a transmission beam is actually applied passes through the transmitter of the UE. Therefore, in the case where characteristics of the transmitter/receiver differ, there is a possibility that the transmission beam based on the downlink reference signal is not an intended beam.

In other words, in the existing beam determining method (also called a precoding weight determining method), the transmission side is not capable of recognizing whether or not the transmission beam (transmission weight) determined based on the received reference signal is proper. When transmission is performed using an improper beam, the problems occur such as decreases in communication throughput, and deterioration of received quality. In addition, FIG. 3 illustrates the UE side as an example, and the similar problems may occur on the BS side.

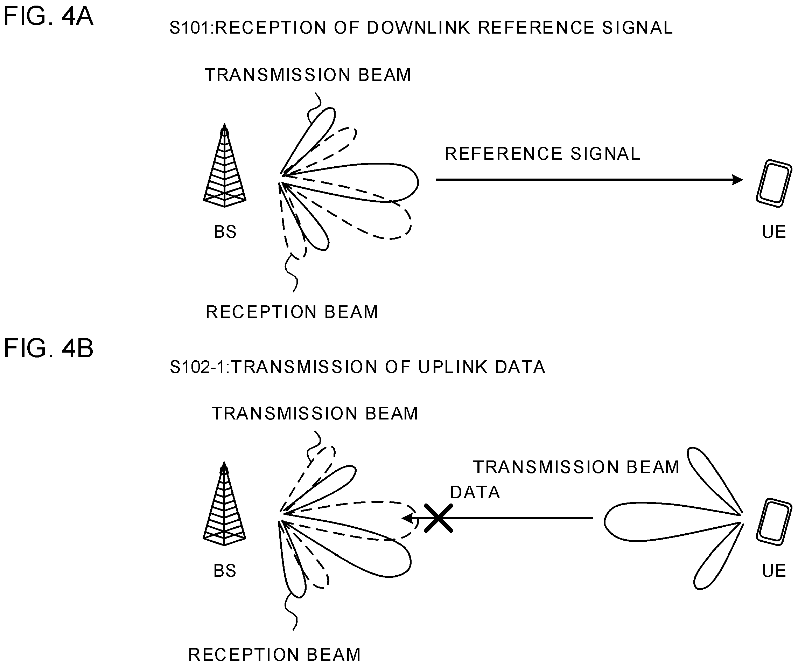

Further, also in the case where the uplink propagation path and downlink propagation path have reciprocity, and the reception beam determined based on the reference signal on the transmission side is an ideal transmission beam, there is a problem that the beam is not a proper beam due to a difference between transmission and reception beams on the reception side. One example will be described using FIG. 4.

FIG. 4 contains diagrams showing one example of the case where the reception beam is different from the transmission beam on the reception side. In FIG. 4, uplink and downlink propagation paths have reciprocity between the BS and the UE. It is assumed that the BS uses the beam different from the transmission beam as the reception beam due to effects of interference and the like.

FIGs. 4A and 4B correspond to FIGs. 1A and 1B, respectively. In FIG. 4A, a downlink reference signal is transmitted using the transmission beam, and based on the received reference signal, the UE determines the transmission beam. In FIG. 4B, the UE transmits data using the transmission beam that should be proper. However, the BS tries reception with a reception beam different from the transmission beam for transmitting the downlink reference signal, in other words, reception beam which does not have the beam shape and/or direction capable of properly receiving the transmission beam of the UE.

Further, there is the case where the example as shown in FIG. 4 occurs intentionally by control of the UE and/or the BS. For example, by the fact that the UE moves, rotates or the like, and that an obstruction appears between the UE and the BS, the case of changing the beam is expected. In the case where an uplink signal from the UE does not arrive, with the transmission beam kept intentionally, the BS may sweep the reception beam to attempt whether to succeed in receiving. Further, conversely, in the case where a downlink signal to the UE does not arrive, with the reception beam kept, the BS may sweep the transmission beam to attempt whether to succeed in transmitting.

In other words, in the existing beam determining method, the transmission side is not capable of recognizing whether or not the party (reception side) uses the same beam in transmission and reception. In this case, there is the risk that the transmission beam determined based on the signal transmitted from the party is not a proper beam for the party. When transmission is performed using an improper beam for the party, the problems occur such as decreases in communication throughput, deterioration of reception quality and the like. In addition, FIG. 4 illustrates uplink transmission as an example, and similar problems may occur also in downlink transmission.

Therefore, the inventors of the present invention conceived determining whether or not an apparatus and/or a party apparatus is capable of using a beam determined based on reciprocity, exploiting feedback from the party apparatus, and determining a beam used in transmission.

Embodiments according to the present invention will be described below in detail with reference to drawings. A radio communication method according to each Embodiment may be used alone, or may be used in combination.

### (Radio communication method)

### <Embodiment 1>

In Embodiment 1 of the present invention, an apparatus (BS and/or UE) determines whether or not a transmission beam determined based on the received reference signal is proper. Specifically, the BS and/or the UE receives feedback on a proper transmission beam from the party, and acquires an indicator on a match between the reception beam (=transmission beam determined based on the received reference signal) determined based on the received reference signal and the transmission beam based on the feedback.

The indicator may be called transmission/reception beam correspondence (Tx/Rx beam correspondence), beam reciprocity, beam calibration, Calibrated/Non-calibrated, reciprocity calibrated/non-calibrated, degree of correspondence, degree of match, simply correspondence and the like.

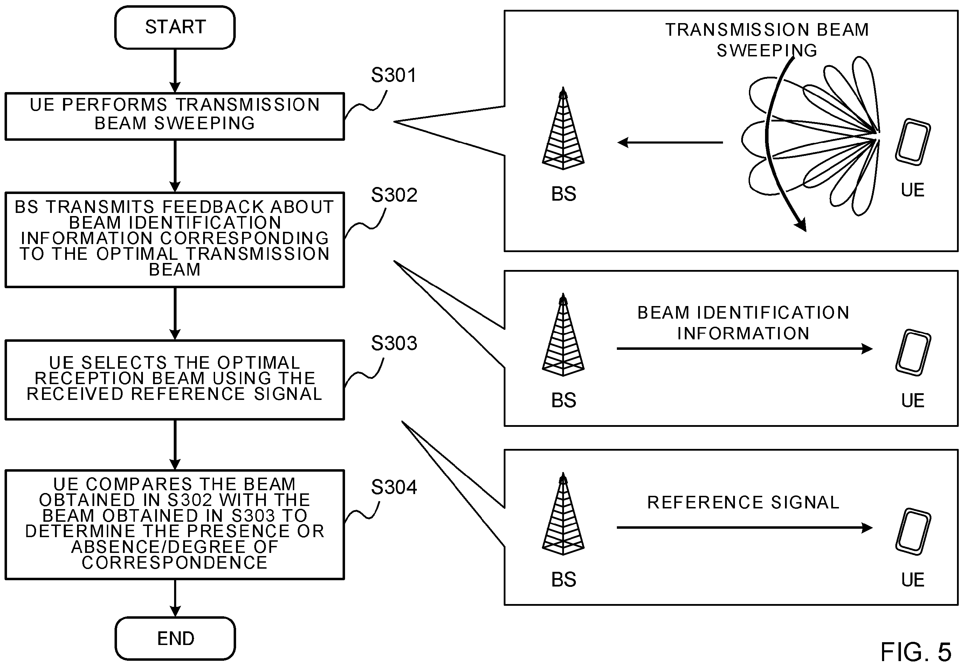

FIG. 5 is a diagram showing one example of a flow of correspondence determination according to Embodiment 1. FIG. 5 shows the example where the UE determines the correspondence, but is not limited thereto. For example, with a flow where the UE and the BS (and, uplink and downlink) are mutually read with each other in the following description, the BS may determine the correspondence.

The UE performs transmission beam sweeping (step S301). In the beam sweeping, a plurality of beams (e.g., a plurality of beams with different directivities) is switched and transmitted in different time regions and/or different frequency regions. In addition, the beam sweeping is preferably performed in contiguous time regions and/or contiguous frequency regions, but may be performed in discontiguous time regions and/or discontiguous frequency regions.

A signal and/or a channel transmitted in sweeping may be any signal, and for example, may be at least one of a reference signal, synchronization signal, random access preamble, control signal, and data signal, or combination thereof. Further, the signal and/or the channel transmitted with each beam may the same, or may vary with beam.

When the BS detects one or more beams transmitted from the UE, the BS determines an optimal beam, and transmits beam identification information indicative of the determined beam as feedback (step S302). Herein, the beam identification information is essentially information used to identify the beam, and may be information on at least one of a beam index, beam factor used in beam forming, angle of beam (e.g., main beam), and radio resources (e.g., time and/or frequency resources, beam transmission timing, subcarrier, etc.) of the beam.

Further, the beam identification information may be transmitted as implicit feedback, by transmission of a predetermined signal and/or channel associated with the beam. For example, the UE may determine an optimal beam, using radio resources, sequence and the like of the received signal. Further, the beam identification information may be propagation path information (e.g., CSI).

The UE receives a reference signal transmitted from the BS, and selects an optimal beam using the received reference signal (step S303). In step S303, as in step S101, the beam may be selected based on downlink propagation path information obtained by measuring the reference signal. In step S303, the UE may acquire beam identification information that corresponds to the selected optimal beam. In addition, the order of steps S301 and S302, and step S303 may be changed and implemented.

The UE compares the beam (first beam) identified in step S302 with the beam (second beam) identified in step S303, and determines the presence or absence, degree and the like of correspondence between both beams (step S304). The presence or absence and/or degree of correspondence may be obtained based on the beam identification information of the first beam and the beam identification information of the second beam.

For example, the presence or absence of correspondence may be judged as "presence" in the case where the first beam and the second beam completely match with each other, or may be judged as "presence" in the case where a difference between both beams is a predetermined threshold or within an allowable range. Further, the degree of correspondence may be a value calculated from the difference between both beams. In addition, the difference between the beams may be a difference obtained from the beam identification information, and for example, may be at least one of a difference in beam index, difference in beam factor, difference in angle of the beam and the like.

The information to determine the correspondence may be notified the UE and/or the BS, using higher layer signaling (e.g., RRC signaling, MAC (Medium Access Control) signaling (e.g., MAC control element (MAC CE (Control Element)), broadcast information, etc.), physical layer signaling (e.g., DCI or uplink control information (UCI)), or combination thereof. For example, the information to determine the correspondence may be information on a predetermined threshold or an allowable range to determine the presence of correspondence.

In addition, in step S304, the presence or absence and/or degree of correspondence may be obtained based on the propagation path information (e.g., CSI). For example, in the case where the uplink propagation path information is transmitted as feedback in step S302, by comparing with the downlink propagation path information obtained in step S303, it is possible to obtain the correspondence, without identifying the beam.

In addition, in step S301, transmission beam sweeping is assumed to be performed, but is not limited thereto. It is essential only that transmission of one or more transmission beams is performed in step S301, and in step S302, the optimal beam may be essentially determined based on the one or more transmission beams.

Further, in step S302 and/or S303, it is assumed that the optical beam is determined/selected, but the invention is not limited thereto. For example, in these steps, some suitable beams may be determined/selected, and in step S304, one or more correspondences may be obtained based on one or more first beams and one or more second beams.

In addition, the determination of correspondence in the UE and the determination of correspondence in the BS may overlap to perform. For example, in beam sweeping in step S301, as well as the transmission beam, the reception beam undergoes beam sweeping (joint sweeping), and the optimal transmission beam and reception beam may be determined parallel.

According to Embodiment 1 as described above, the transmission side is capable of determining whether or not a transmission beam determined based on the received signal is proper.

### <Embodiment 2>

In Embodiment 2 of the present invention, the apparatus (BS and/or UE) notifies the communicating party of information on correspondence of the apparatus. In this case, the transmission side grasps the correspondence of the party, and is thereby capable of performing proper beam control.

The information on correspondence may be information indicative of the presence or absence of correspondence, or may be information indicative of the degree of correspondence. Further, as the information on correspondence, the above-mentioned threshold or allowable range used in determination of correspondence may be included.

The information on correspondence may be notified the UE and/or BS explicitly, using higher layer signaling (e.g., RRC signaling, MAC signaling, broadcast information, etc.), physical layer signaling (e.g., DCI or UCI), or combination thereof.

Further, the information on correspondence may be notified the UE and/or BS implicitly, by at least one of a sequence of a predetermined signal (e.g., reference signal), cyclic shift to apply, and radio resources (e.g., time and/or frequency resources, transmission timing, subcarrier, etc.) or combination thereof.

In Embodiment 2, in the case where both the BS and the UE have the correspondence and/or degrees of correspondence are within an allowable range in both the BS and the UE, using a propagation path estimation result of one direction, a transmission beam determination of the other direction (reciprocity based beam determination) may be made. On the other hand, in other cases, a transmission beam determination (non-reciprocity based beam determination) may be made, based on the feedback information received from the communicating party. In addition, the allowable range about the degree of correspondence of the BS may be different from the allowable range about the degree of correspondence of the UE.

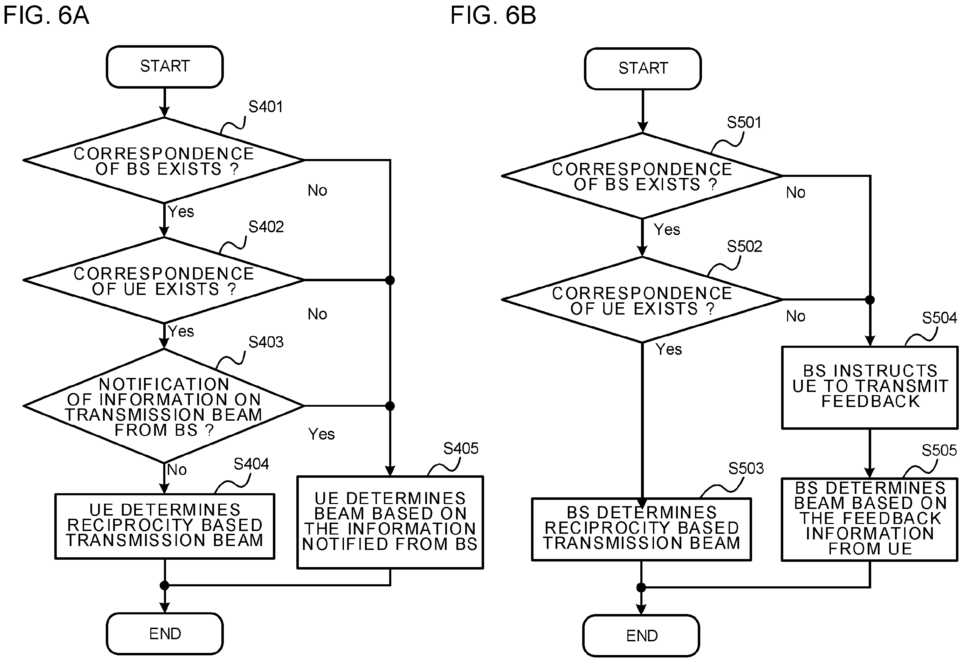

FIG. 6 contains diagrams showing one example of flows of beam control according to Embodiment 2. FIG. 6A shows the example where the UE determines a beam used in uplink transmission (e.g., uplink data transmission), and FIG. 6B shows the example where the BS determines a beam used in downlink transmission (e.g., downlink data transmission), but the flows of beam control are not limited thereto.

In FIG. 6A, with respect to uplink data transmission, the UE is capable of spontaneously switching between reciprocity based/non-reciprocity based. Further, the BS is capable of permitting the UE to use reciprocity based.

Specifically, the UE acquires the information on correspondence of the BS, and determines the presence or absence of correspondence of the BS (step S401). In the case where the BS has the correspondence (step S401-Yes), the UE acquires the information on correspondence of the UE, and determines the presence or absence of correspondence of the UE (step S401).

In the case where both the BS and the UE have the correspondence (step 402-Yes), the UE ascertains whether or not to receive information (e.g., at least one of beam index, TPMI, and group index) on the uplink transmission beam from the BS (step S403). In addition, steps S401 and S402 may be implemented in any order.

In the case where the information on the beam for uplink transmission is not indicated (step S403-No), the UE assumes that the BS permits the reciprocity based beam determination, and determines a reciprocity based transmission beam (step S404). In step S404, for example, based on the downlink propagation path information obtained by using the downlink reference signal, the UE may determine the transmission beam.

On the other hand, in the case where at least one of the BS and the UE does not have the correspondence (step S401-No, S402-No) and/or the information (information indicative of the transmission beam) on the uplink transmission beam is notified (step S403-Yes), the UE determines a non-reciprocity based transmission beam (step S405). In step S405, for example, according to the index (e.g., TPMI) indicated from the BS, the UE may determine the transmission beam.

In addition, step S403 may be omitted. Further, in addition to step S403, or as a substitute for step S403, the BS may notify the UE of information on availability of reciprocity based beam determination. The notification may be performed by higher layer signaling (e.g., RRC signaling), physical layer signaling (e.g., DCI/UCI), or combination thereof. In the case where the BS indicates that the reciprocity based beam determination is allowed, the UE may perform step S404, and in the case where the BS indicates that the determination is not allowed, may perform step S405.

In FIG. 6B, with respect to downlink data transmission, the BS is capable of spontaneously switching between reciprocity based/non-reciprocity based.

Specifically, the BS acquires the information on correspondence of the BS, and determines the presence or absence of correspondence of the BS (step S501). In the case where the BS has the correspondence (step S501-Yes), the BS acquires the information on correspondence of the UE, and determines the presence or absence of correspondence of the UE (step S502).

In the case where both the BS and the UE have the correspondence (step 502-Yes), the BS determines a reciprocity based transmission beam (step S503). In step S503, for example, based on the uplink propagation path information obtained by using the uplink reference signal, the BS may determine the transmission beam. In addition, steps S501 and S502 may be implemented in any order.

On the other hand, in the case where at least one of the BS and the UE does not have the correspondence (step S501-No, S502-No), the BS determines a non-reciprocity based transmission beam (steps S504, S505).

For example, the BS may instruct the UE to transmit feedback about information on the downlink transmission beam (information giving instructions for the downlink transmission beam, for example, at least one of beam index, PMI and group index) (step S504), and determine a transmission beam by referring to the information (e.g., PMI) transmitted from the UE as feedback (step S505).

In addition, step S504 may be omitted. For example, in step S501, in the case where the BS performs transmission beam sweeping, and the UE transmits information on the optimal beam as feedback, in step S505, the BS may determine a transmission beam based on the information,

According to Embodiment 2 as described above, in the case where transmission/reception beams on the transmission side and/or on the reception side do not match, it is possible to prevent a reciprocity based improper transmission beam determination from being made, and using a substitute means (e.g., PMI or TPMI feedback from the communicating party), it is possible to make a transmission beam determination.

<Modification>

In addition, the determination of the presence or absence of correspondence, notification and the like (e.g., steps S401, S402, S501, S502, etc.) described in the above-mentioned Embodiment may be implemented, using notification of predetermined information (may be called correspondence ascertainment trigger and the like) from the BS or the US as a trigger, or may be implemented at predetermined timing (e.g., in a predetermined period, timing at which at least one of the transmission beam and the reception beam is changed, etc.)

Further, a part or the whole of the processing of each Embodiment may be performed after establishing RRC connection, or may be performed before establishing RRC connection. For example, during the random access procedure, the UE may perform transmission beam sweeping, using the random access preamble (step S301), and the BS may transmit an index that corresponds to the optimal beam using the random access response (step S302), and the like.

In the above-mentioned Embodiment, reciprocity based transmission beams are determined in the case where both the BS and the UE have the correspondence, but are not limited thereto. For example, also in the case where at least one of the BS and the UE does not have the correspondence, reciprocity based transmission beams may be determined. In this case, offset information may be obtained based on the information of correspondence of the BS and/or the UE, and using the offset information, the reciprocity based transmission beam may be corrected.

For example, the offset information may be a difference between the transmission beam determined based on feedback from the party and the transmission beam determined based on the received reference signal, and for example, may be at least one of a difference in beam index, difference in beam factor, difference in angle of the beam and the like.

By this means, for example, since the beam is roughly adjusted using the offset information to correct the beam based on the information on correspondence for each predetermined period, and it is possible to adjust the beam finely based on the reference signal within the period, it is possible to suitably acquire a trade-off between overhead and accuracy of control.

In addition, in the above-mentioned Embodiment, the reception beam used in judgment of the correspondence is determined based on the received reference signal, but is not limited thereto. For example, the reception beam may be determined based on signals such as a received data signal, control signal and synchronization signal except the reference signal, or may be determined based on predetermined information.

In addition, in the case where the correspondence exists in the BS (may be called a transmission/reception point), the BS and/or the UE may assume that the following (1) and/or (2) is met: (1) Based on downlink measurement by the UE using one or more transmission beams of the BS, the BS is capable of determining a reception beam of the BS for uplink reception; and (2) based on uplink measurement by the BS using one or more reception beams of the BS, the BS is capable of determining a transmission beam of the BS for downlink transmission.

Further, in the case where the correspondence exists in the UE, the BS and/or the UE may assume that the following (3) and/or (4) is met: (4) Based on downlink measurement by the UE using one or more reception beams of the UE, the UE is capable of determining a transmission beam of the UE for uplink transmission; and (4) based on instructions from the BS based on uplink measurement by the BS using one or more transmission beams of the UE, the UE is capable of determining a reception beam of the UE for downlink reception.

### (Radio communication system)

A configuration of a radio communication system according to one Embodiment of the present invention will be described below. In the radio communication system, communication is performed by using any of the radio communication methods according to above-mentioned each Embodiment of the invention or combination thereof.

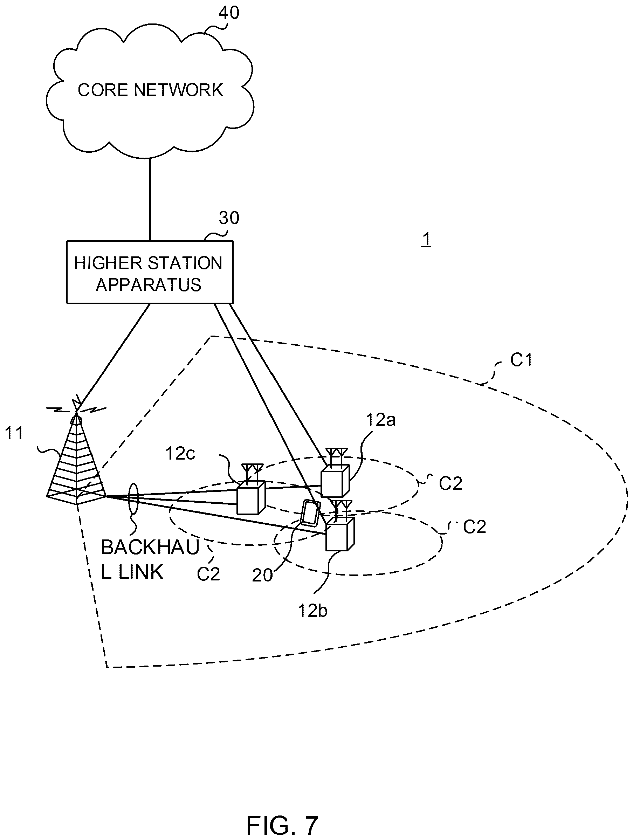

FIG. 7 is a diagram showing one example of a schematic configuration of the radio communication system according to one Embodiment of the present invention. In the radio communication system 1, it is possible to apply carrier aggregation (CA) to aggregate a plurality of base frequency blocks (component carriers) with a system bandwidth (e.g., 20 MHz) of the LTE system as one unit and/or dual connectivity (DC).

In addition, the radio communication system 1 may be called LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology) and the like, or may be called the system to actualize each system described above.

The radio communication system 1 is provided with a radio base station 11 for forming a macrocell C1 with relatively wide coverage, and radio base stations 12 (12a to 12c) disposed inside the macrocell C1 to form small cells C2 narrower than the macrocell C1. Further, a user terminal 20 is disposed in the macrocell C1 and each of the small cells C2. The arrangement, the number and the like of each cell and user terminal 20 are not limited to those shown in the figure.

The user terminal 20 is capable of connecting to both the radio base station 11 and the radio base station 12. The user terminal 20 is assumed to concurrently use the macrocell C1 and small cell C2 using CA or DC. Further, the user terminal 20 may apply CA or DC using a plurality of cells (CCs) (e.g., 5 CCs or less, 6 CCs or more).

The user terminal 20 and radio base station 11 are capable of communicating with each other using carriers (also called the existing carrier, legacy carrier and the like) with a narrow bandwidth in a relatively low frequency band (e.g., 2 GHz). On the other hand, the user terminal 20 and radio base station 12 may use carriers with a wide bandwidth in a relatively high frequency band (e.g., 3.5 GHz, 5 GHz, etc.), or may use the same carrier as in the radio base station 11. In addition, the configuration of the frequency band used in each radio base station is not limited thereto.

It is possible to configure so that the radio base station 11 and radio base station 12 (or, two radio base stations 12) undergo wired connection (e.g., optical fiber in conformity with CPRI (Common Public Radio Interface), X2 interface, etc.), or wireless connection.

The radio base station 11 and each of the radio base stations 12 are respectively connected to a higher station apparatus 30, and are connected to a core network 40 via the higher station apparatus 30. In addition, for example, the higher station apparatus 30 includes an access gateway apparatus, Radio Network Controller (RNC), Mobility Management Entity (MME) and the like, but is not limited thereto. Further, each of the radio base stations 12 may be connected to the higher station apparatus 30 via the radio base station 11.

In addition, the radio base station 11 is a radio base station having relatively wide coverage, and may be called a macro base station, collection node, eNB (eNodeB), transmission and reception point and the like. Further, the radio base station 12 is a radio base station having local coverage, and may be called a small base station, micro-base station, pico-base station, femto-base station, HeNB (Home eNodeB), RRH (Remote Radio Head), transmission and reception point and the like. Hereinafter, in the case of not distinguishing between the radio base stations 11 and 12, the stations are collectively called a radio base station 10.

Each user terminal 20 is a terminal supporting various communication schemes such as LTE and LTE-A, and may include a fixed communication terminal (fixed station), as well as the mobile communication terminal (mobile station).

In the radio communication system 1, as radio access schemes, Orthogonal Frequency Division Multiple Access (OFDMA) is applied on downlink, and Single Carrier Frequency Division Multiple Access (SC-FDMA) is applied on uplink.

OFDMA is a multicarrier transmission scheme for dividing a frequency band into a plurality of narrow frequency bands (subcarriers), and mapping data to each subcarrier to perform communication. SC-FDMA is a single-carrier transmission scheme for dividing a system bandwidth into bands comprised of one or contiguous resource blocks for each terminal so that a plurality of terminals uses mutually different bands, and thereby reducing interference among terminals. In addition, uplink and downlink radio access schemes are not limited to the combination of the schemes, and another radio access scheme may be used.

As downlink channels, in the radio communication system 1 are used a downlink shared channel (PDSCH: Physical Downlink Shared Channel) shared by user terminals 20, broadcast channel (PBCH: Physical Broadcast Channel), downlink L1/L2 control channels and the like. User data, higher layer control information, SIB (System Information Block) and the like are transmitted on the PDSCH. Further, MIB (Master Information Block) is transmitted on the PBCH.

The downlink L1/L2 control channel includes PDCCH (Physical Downlink Control Channel), EPDCCH (Enhanced Physical Downlink Control Channel), PCFICH (Physical Control Format Indicator Channel), PHICH (Physical Hybrid-ARQ Indicator Channel) and the like. The downlink control information (DCI) including scheduling information of the PDSCH and PUSCH and the like is transmitted on the PDCCH. The number of OFDM symbols used in the PDCCH is transmitted on the PCFICH. Receipt confirmation information (e.g., also referred to as retransmission control information, HARQ-ACK, ACK/NACK, etc.) of HARQ. (Hybrid Automatic Repeat reQuest) for the PUSCH is transmitted on the PHICH. The EPDCCH is frequency division multiplexed with the PDSCH (downlink shared data channel) to be used in transmitting the DCI and the like as the PDCCH.

As uplink channels, in the radio communication system 1 are used an uplink shared channel (PUSCH: Physical Uplink Shared Channel) shared by user terminals 20, uplink control channel (PUCCH: Physical Uplink Control Channel), random access channel (PRACH: Physical Random Access Channel) and the like. User data, higher layer control information and the like is transmitted on the PUSCH. Further, radio quality information (CQI: Channel Quality Indicator) of downlink, receipt confirmation information and the like are transmitted on the PUCCH. A random access preamble to establish connection with the cell is transmitted on the

### PRACH.

As downlink reference signals, in the radio communication system 1 are transmitted Cell-specific Reference Signal (CRS), Channel State Information-Reference Signal (CSI-RS), Demodulation Reference Signal (DMRS: DeModulation Reference Signal), Positioning Reference Signal (PRS) and the like. Further, as uplink reference signals, in the radio communication system 1 are transmitted Sounding Reference Signal (SRS), Demodulation Reference Signal (DMRS) and the like. In addition, the DMRS may be called UE-specific Reference Signal. Further, the transmitted reference signals are not limited thereto.

### (Radio base station)

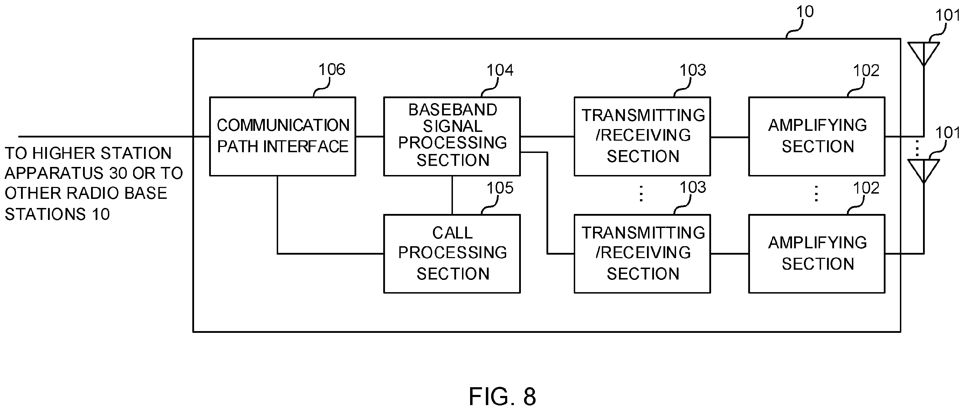

FIG. 8 is a diagram showing one example of an entire configuration of the radio base station according to one Embodiment of the present invention. The radio base station 10 is provided with a plurality of transmitting/receiving antennas 101, amplifying sections 102, transmitting/receiving sections 103, baseband signal processing section 104, call processing section 105, and communication path interface 106. In addition, with respect to each of the transmitting/receiving antenna 101, amplifying section 102, and transmitting/receiving section 103, the radio base station may be configured to include at least one or more.

User data to transmit to the user terminal 20 from the radio base station 10 on downlink is input to the baseband signal processing section 104 from the higher station apparatus 30 via the communication path interface 106.

The baseband signal processing section 104 performs, on the user data, transmission processing such as processing of PDCP (Packet Data Convergence Protocol) layer, segmentation and concatenation of the user data, transmission processing of RLC (Radio Link Control) layer such as RLC retransmission control, MAC (Medium Access Control) retransmission control (e.g., transmission processing of HARQ), scheduling, transmission format selection, channel coding, Inverse Fast Fourier Transform (IFFT) processing, and precoding processing to transfer to the transmitting/receiving sections 103. Further, also concerning a downlink control signal, the section 104 performs transmission processing such as channel coding and Inverse Fast Fourier Transform on the signal to transfer to the transmitting/receiving sections 103.

Each of the transmitting/receiving sections 103 converts the baseband signal, which is subjected to precoding for each antenna and is output from the baseband signal processing section 104, into a signal with a radio frequency band to transmit. The radio-frequency signal subjected to frequency conversion in the transmitting/receiving section 103 is amplified in the amplifying section 102, and is transmitted from the transmitting/receiving antenna 101. The transmitting/receiving section 103 is capable of being comprised of a transmitter/receiver, transmitting/receiving circuit or transmitting/receiving apparatus explained based on common recognition in the technical field according to the present invention. In addition, the transmitting/receiving section 103 may be comprised as an integrated transmitting/receiving section, or may be comprised of a transmitting section and receiving section.

On the other hand, for uplink signals, radio-frequency signals received in the transmitting/receiving antennas 101 are amplified in the amplifying sections 102. The transmitting/receiving section 103 receives the uplink signal amplified in the amplifying section 102. The transmitting/receiving section 103 performs frequency conversion on the received signal into a baseband signal to output to the baseband signal processing section 104.

For user data included in the input uplink signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer to transfer to the higher station apparatus 30 via the communication path interface 106. The call processing section 105 performs call processing (configuration, release and the like) of a communication channel, state management of the radio base station 10, management of radio resources and the like.

The communication path interface 106 transmits and receives signals to/from the higher station apparatus 30 via a predetermined interface. Further, the communication path interface 106 may transmit and receive signals (backhaul signaling) to/from another radio base station 10 via an inter-base station interface (e.g., optical fiber in conformity with CPRI (Common Public Radio Interface), X2 interface).

In addition, the transmitting/receiving section 103 may further have an analog beam forming section for performing analog beam forming. The analog beam forming section may be comprised of an analog beam forming circuit (e.g., phase shifter, phase shift circuit) or analog beam forming apparatus (e.g., phase shift device) explained based on the common recognition in the technical field according to the present invention. Further, for example, the transmitting/receiving antenna 101 may be comprised of an array antenna.

The transmitting/receiving section 103 may receive beam identification information indicative of a transmission beam of the radio base station 10, information on correspondence of the user terminal 20 and the like. The transmitting/receiving section 103 may transmit beam identification information indicative of a transmission beam of the user terminal 20, information on correspondence of the radio base station 10 and the like.

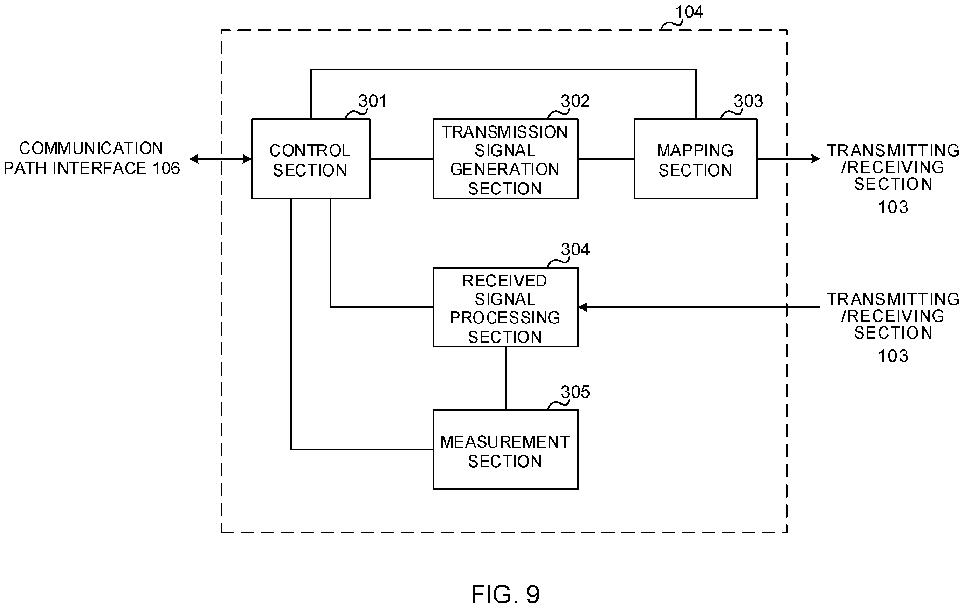

FIG. 9 is a diagram showing one example of a function configuration of the radio base station according to one Embodiment of the present invention. In addition, this example mainly illustrates function blocks of a characteristic portion in this Embodiment, and the radio base station 10 is assumed to have other function blocks required for radio communication.

The baseband signal processing section 104 is provided with at least a control section (scheduler) 301, transmission signal generating section 302, mapping section 303, received signal processing section 304, and measurement section 305. In addition, these components are essentially included in the radio base station 10, and a part or the whole of the components may not be included in the baseband signal processing section 104.

The control section (scheduler) 301 performs control of the entire radio base station 10. The control section 301 is capable of being comprised of a controller, control circuit or control apparatus explained based on the common recognition in the technical field according to the present invention.

For example, the control section 301 controls generation of signals by the transmission signal generating section 302, allocation of signals by the mapping section 303 and the like. Further, the control section 301 controls reception processing of signals by the received signal processing section 304, measurement of signals by the measurement section 305 and the like.

The control section 301 controls scheduling (e.g., resource allocation) of system information, downlink data signal (e.g., signal transmitted on the PDSCH), and downlink control signal (e.g., signal transmitted on the PDCCH and/or EPDCCH, receipt confirmation information, etc.). Further, based on a result obtained by determining the necessity of retransmission control to an uplink data signal, and the like, the control section 301 controls generation of the downlink control signal, downlink data signal and the like. Furthermore, the control section 301 controls scheduling of synchronization signals (e.g., PSS (Primary Synchronization Signal)/SSS (Secondary Synchronization Signal)), downlink reference signals (e.g., CRS, CSI-RS, DMRS) and the like.

Further, the control section 301 controls scheduling of the uplink data signal (e.g., signal transmitted on the PUSCH), uplink control signal (e.g., signal transmitted on the PUCCH and/or PUSCH, receipt confirmation information, etc.), random access preamble transmitted (e.g., signal transmitted on the PRACH), uplink reference signal and the like.

The control section 301 controls to form a transmission beam and/or a reception beam, using digital BF (e.g., precoding) by the baseband signal processing section 104 and/or analog BF (e.g., phase rotation) by the transmitting/receiving section 103. Based on the downlink propagation path information, uplink propagation path information and the like, the control section 301 may control to form the beam. These pieces of propagation path information may be acquired from the received signal processing section 304 and/or the measurement section 305.

The control section 301 may determine a transmission beam, based on received predetermined information (e.g., beam identification information). The control section 301 may determine a reception beam, based on a received predetermined signal (e.g., reference signal). Further, the control section 301 may acquire a first indicator (the information on correspondence) on a match between the transmission beam determined based on received predetermined information and the reception beam determined based on the received predetermined signal. The correspondence may be called an indicator (information) on a match (similarity) of a plurality of beams.

Further, when the control section 301 acquires a second indicator (the information on correspondence of the user terminal 20) on a match between the transmission beam and the reception beam of another apparatus (e.g., user terminal 20) from the received signal processing section 304, based on the first indicator and the second indicator, the section may determine whether or not (whether or not to determine a reciprocity based transmission beam) to perform transmission using a transmission beam determined based on the received reference signal.

In the case where both the first indicator and the second indicator meet a predetermined condition (e.g., both of the indicators indicate the presence of correspondence, (degrees of) both of the indicators are within an allowable range, etc.), the control section 301 may judge that a reciprocity based transmission beam is determined.

Also in the case where both the first indicator and the second indicator meet the above-mentioned predetermined condition, when predetermined information (e.g., information on the transmission beam (beam index, PMI, group index, etc.), information on availability of the reciprocity based beam determination) is notified, the control section 301 may judge that a reciprocity based transmission beam is not determined (a non-reciprocity based transmission beam is determined.)

In addition, transmission using a transmission beam may be read with transmission of a signal with predetermined precoding applied.

Based on instructions from the control section 301, the transmission signal generating section 302 generates downlink signals (downlink control signal, downlink data signal, downlink reference signal, etc.) to output to the mapping section 303. The transmission signal generating section 302 is capable of being comprised of a signal generator, signal generating circuit or signal generating apparatus explained based on the common recognition in the technical field according to the present invention.

For example, based on instructions from the control section 301, the transmission signal generating section 302 generates DL assignment to notify of assignment information of downlink signals and UL grant to notify of assignment information of uplink signals. Further, the downlink data signal is subjected to coding processing and modulation processing, according to a coding rate, modulation scheme and the like determined based on the channel state information (CSI) from each user terminal 20 and the like.

Based on instructions from the control section 301, the mapping section 303 maps the downlink signal generated in the transmission signal generating section 302 to predetermined radio resources to output to the transmitting/receiving section 103. The mapping section 303 is capable of being comprised of a mapper, mapping circuit or mapping apparatus explained based on the common recognition in the technical field according to the present invention.

The received signal processing section 304 performs reception processing (e.g., demapping, demodulation, decoding, etc.) on the received signal input from the transmitting/receiving section 103. Herein, for example, the received signal is the uplink signal (uplink control signal, uplink data signal, uplink reference signal, etc.) transmitted from the user terminal 20. The received signal processing section 304 is capable of being comprised of a signal processor, signal processing circuit or signal processing apparatus explained based on the common recognition in the technical field according to the present invention.

The received signal processing section 304 outputs the information decoded by the reception processing to the control section 301. For example, in the case of receiving the PUCCH including HARQ-ACK, the section 304 outputs the HARQ-ACK to the control section 301. Further, the received signal processing section 304 outputs the received signal and/or signal subjected to the reception processing to the measurement section 305.

The measurement section 305 performs measurement on the received signal. The measurement section 305 is capable of being comprised of a measurement device, measurement circuit or measurement apparatus explained based on the common recognition in the technical field according to the present invention.

For example, based on the received signal, the measurement section 305 may perform RRM (Radio Resource Management) measurement, CSI (Channel State Information) measurement and the like. The measurement section 305 may measure received power (e.g., RSRP (Reference Signal Received Power)), received quality (e.g., RSRQ. (Reference Signal Received Quality), SINR (Signal to Interference plus Noise Ratio)), signal strength (e.g., RSSI (Received Signal Strength Indicator)), propagation path information (e.g., CSI) and the like. The measurement result may be output to the control section 301.

### (User terminal)

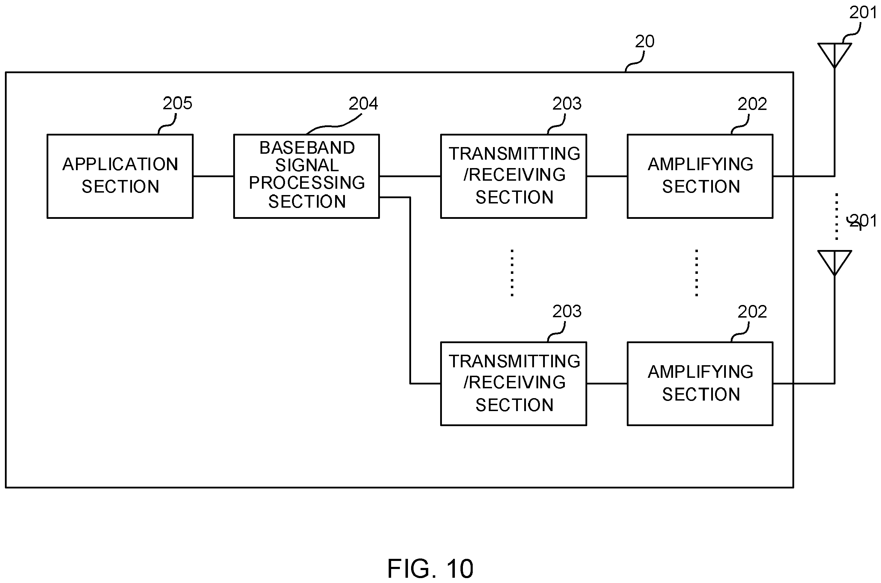

FIG. 10 is a diagram showing one example of an entire configuration of the user terminal according to one Embodiment of the present invention. The user terminal 20 is provided with a plurality of transmitting/receiving antennas 201, amplifying sections 202, transmitting/receiving sections 203, baseband signal processing section 204, and application section 205. In addition, with respect to each of the transmitting/receiving antenna 201, amplifying section 202, and transmitting/receiving section 203, the user terminal may be configured to include at least one or more.

Radio-frequency signals received in the transmitting/receiving antennas 201 are respectively amplified in the amplifying sections 202. Each of the transmitting/receiving sections 203 receives the downlink signal amplified in the amplifying section 202. The transmitting/receiving section 203 performs frequency conversion on the received signal into a baseband signal to output to the baseband signal processing section 204. The transmitting/receiving section 203 is capable of being comprised of a transmitter/receiver, transmitting/receiving circuit or transmitting/receiving apparatus explained based on the common recognition in the technical field according to the present invention. In addition, the transmitting/receiving section 203 may be comprised as an integrated transmitting/receiving section, or may be comprised of a transmitting section and receiving section.

The baseband signal processing section 204 performs FFT processing, error correcting decoding, reception processing of retransmission control and the like on the input baseband signal. User data on downlink is transferred to the application section 205. The application section 205 performs processing concerning layers higher than the physical layer and MAC layer, and the like. Further, among the downlink data, broadcast information may also be transferred to the application section 205.

On the other hand, for user data on uplink, the data is input to the baseband signal processing section 204 from the application section 205. The baseband signal processing section 204 performs transmission processing of retransmission control (e.g., transmission processing of HARQ), channel coding, precoding, Discrete Fourier Transform (DFT) processing, IFFT processing and the like to transfer to each of the transmitting/receiving sections 203. Each of the transmitting/receiving sections 203 converts the baseband signal output from the baseband signal processing section 204 into a signal with a radio frequency band to transmit. The radio-frequency signals subjected to frequency conversion in the transmitting/receiving sections 203 are amplified in the amplifying sections 202, and are transmitted from the transmitting/receiving antennas 201, respectively.

In addition, the transmitting/receiving section 203 may further have an analog beam forming section for performing analog beam forming. The analog beam forming section may be comprised of an analog beam forming circuit (e.g., phase shifter, phase shift circuit) or analog beam forming apparatus (e.g., phase shift device) explained based on the common recognition in the technical field according to the present invention. Further, for example, the transmitting/receiving antenna 201 may be comprised of an array antenna.

The transmitting/receiving section 203 may transmit the beam identification information indicative of a transmission beam of the radio base station 10, information on correspondence of the user terminal 20 and the like. The transmitting/receiving section 203 may receive the beam identification information indicative of a transmission beam of the user terminal 20, information on correspondence of the radio base station 10 and the like.

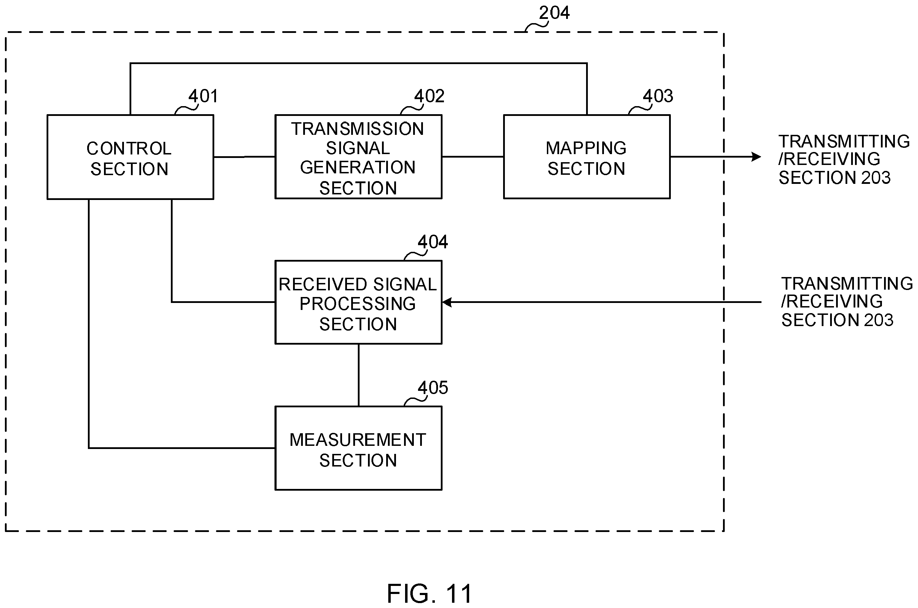

FIG. 11 is a diagram showing one example of a function configuration of the user terminal according to one Embodiment of the present invention. In addition, this example mainly illustrates function blocks of a characteristic portion in this Embodiment, and the user terminal 20 is assumed to have other function blocks required for radio communication.

The baseband signal processing section 204 that the user terminal 20 has is provided with at least a control section 401, transmission signal generating section 402, mapping section 403, received signal processing section 404, and measurement section 405. In addition, these components are essentially included in the user terminal 20, and a part or the whole of the components may not be included in the baseband signal processing section 204.

The control section 401 performs control of the entire user terminal 20. The control section 401 is capable of being comprised of a controller, control circuit or control apparatus explained based on the common recognition in the technical field according to the present invention.

For example, the control section 401 controls generation of signals by the transmission signal generating section 402, allocation of signals by the mapping section 403 and the like. Further, the control section 401 controls reception processing of signals by the received signal processing section 404, measurement of signals by the measurement section 405 and the like.

The control section 401 acquires the downlink control signal and downlink data signal transmitted from the radio base station 10, from the received signal processing section 404. Based on the downlink control signal and/or a result obtained by determining the necessity of retransmission control to the downlink data signal, and the like, the control section 401 controls generation of the uplink control signal and/or uplink data signal.

The control section 401 may control to form a transmission beam and/or a reception beam, using digital BF (e.g., precoding) by the baseband signal processing section 104 and/or analog BF (e.g., phase rotation) by the transmitting/receiving section 103. Based on the downlink propagation path information, uplink propagation path information and the like, the control section 401 may control to form the beam. These pieces of propagation path information may be acquired from the received signal processing section 404 and/or the measurement section 405.

The control section 401 may determine a transmission beam, based on received predetermined information (e.g., beam identification information). The control section 401 may determine a reception beam, based on a received predetermined signal (e.g., reference signal). Further, the control section 401 may acquire the first indicator (information on correspondence) on a match between the transmission beam determined based on the received predetermined information and the reception beam determined based on the received predetermined signal.

Further, when the control section 401 acquires the second indicator (information on correspondence of the radio base station 10) on a match between the transmission beam and the reception beam of another apparatus (e.g., radio base station 10) from the received signal processing section 404, based on the first indicator and the second indicator, the section may determine whether or not (whether or not to determine a reciprocity based transmission beam) to perform transmission using a transmission beam determined based on the received reference signal.

In the case where both the first indicator and the second indicator meet a predetermined condition (e.g., both of the indicators indicate the presence of correspondence, (degrees of) both of the indicators are within an allowable range, etc.), the control section 401 may judge that a reciprocity based transmission beam is determined.

Also in the case where both the first indicator and the second indicator meet the above-mentioned predetermined condition, when predetermined information (e.g., information on the transmission beam (beam index, PMI, group index, etc.), information on availability of the reciprocity based beam determination) is notified, the control section 401 may judge that a reciprocity based transmission beam is not determined (a non-reciprocity based transmission beam is determined.)

Further, in the case of acquiring various pieces of information notified from the radio base station 10, from the received signal processing section 404, based on the information, the control section 401 may update a parameter used in control.

Based on instructions from the control section 401, the transmission signal generating section 402 generates uplink signals (uplink control signal, uplink data signal, uplink reference signal, etc.) to output to the mapping section 403. The transmission signal generating section 402 is capable of being comprised of a signal generator, signal generating circuit or signal generating apparatus explained based on the common recognition in the technical field according to the present invention.

For example, based on instructions from the control section 401, the transmission signal generating section 402 generates the uplink control signal about receipt confirmation information, channel state information (CSI) and the like. Further, based on instructions from the control section 401, the transmission signal generating section 402 generates the uplink data signal. For example, when the downlink control signal notified from the radio base station 10 includes the UL grant, the transmission signal generating section 402 is instructed to generate the uplink data signal from the control section 401.

Based on instructions from the control section 401, the mapping section 403 maps the uplink signal generated in the transmission signal generating section 402 to radio resources to output to the transmitting/receiving section 203. The mapping section 403 is capable of being comprised of a mapper, mapping circuit or mapping apparatus explained based on the common recognition in the technical field according to the present invention.

The received signal processing section 404 performs reception processing (e.g., demapping, demodulation, decoding, etc.) on the received signal input from the transmitting/receiving section 203. Herein, for example, the received signal is the downlink signal (downlink control signal, downlink data signal, downlink reference signal, etc.) transmitted from the radio base station 10. The received signal processing section 404 is capable of being comprised of a signal processor, signal processing circuit or signal processing apparatus explained based on the common recognition in the technical field according to the present invention. Further, the received signal processing section 404 is capable of constituting the receiving section according to the present invention.

The received signal processing section 404 outputs the information decoded by the reception processing to the control section 401. For example, the received signal processing section 404 outputs the broadcast information, system information, RRC signaling, DCI and the like to the control section 401. Further, the received signal processing section 404 outputs the received signal and/or signal subjected to the reception processing to the measurement section 405.

The measurement section 405 performs measurement on the received signal. The measurement section 405 is capable of being comprised of a measurement device, measurement circuit or measurement apparatus explained based on the common recognition in the technical field according to the present invention.

For example, based on the received signal, the measurement section 405 may perform RRM measurement, CSI measurement and the like. The measurement section 405 may measure received power (e.g., RSRP), received quality (e.g., RSRQ, SINR), signal strength (e.g., RSSI), propagation path information (e.g., CSI) and the like. The measurement result may be output to the control section 401.

### (Hardware configuration)

In addition, the block diagrams used in explanation of the above-mentioned Embodiments show blocks on a function-by-function basis. These function blocks (configuration sections) are actualized by any combination of hardware and/or software. Further, the means for actualizing each function block is not limited particularly. In other words, each function block may be actualized by a single apparatus combined physically and/or logically, or two or more apparatuses that are separated physically and/or logically are connected directly and/or indirectly (e.g., by cable and/or radio), and each function block may be actualized by a plurality of these apparatuses.

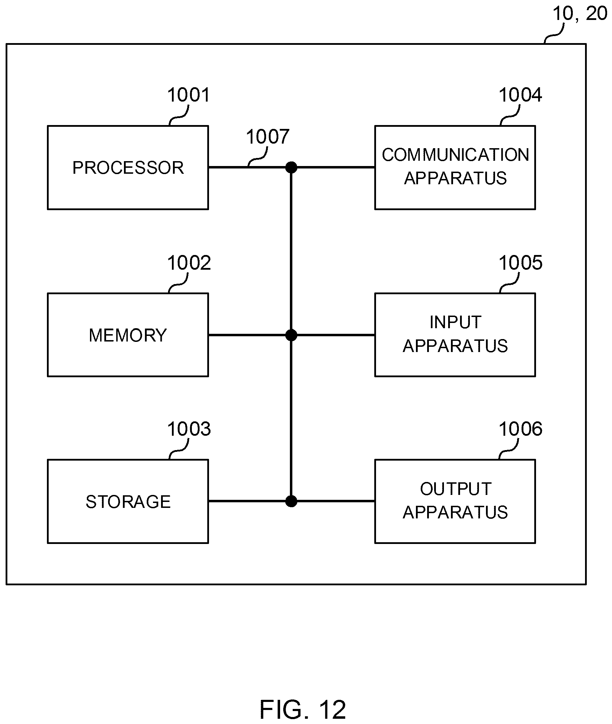

For example, each of the radio base station, user terminal and the like in one Embodiment of the present invention may function as a computer that performs the processing of the radio communication method of the invention. FIG. 12 is a diagram showing one example of a hardware configuration of each of the radio base station and user terminal according to one Embodiment of the invention. Each of the radio base station 10 and user terminal 20 as described above may be physically configured as a computer apparatus including a processor 1001, memory 1002, storage 1003, communication apparatus 1004, input apparatus 1005, output apparatus 1006, bus 1007 and the like.

In addition, in the following description, it is possible to replace the letter of "apparatus" with a circuit, device, unit and the like to read. With respect to each apparatus shown in the figure, the hardware configuration of each of the radio base station 10 and the user terminal 20 may be configured so as to include one or a plurality of apparatuses, or may be configured without including a part of apparatuses.

For example, a single processor 1001 is shown in the figure, but a plurality of processors may exist. Further, the processing may be executed by a single processor, or may be executed by one or more processors at the same time, sequentially or by another technique. In addition, the processor 1001 may be implemented on one or more chips.

For example, each function in the radio base station 10 and user terminal 20 is actualized in a manner such that predetermined software (program) is read on the hardware of the processor 1001, memory 1002 and the like, and that the processor 1001 thereby performs computations, and controls communication by the communication apparatus 1004, and read and/or write of data in the memory 1002 and storage 1003.

For example, the processor 1001 operates an operating system to control the entire computer. The processor 1001 may be comprised of a Central Processing Unit (CPU) including interfaces with peripheral apparatuses, control apparatus, computation apparatus, register and the like. For example, the above-mentioned baseband signal processing section 104 (204), call processing section 105 and the like may be actualized by the processor 1001.

Further, the processor 1001 reads the program (program code), software module, data and the like on the memory 1002 from the storage 1003 and/or the communication apparatus 1004, and according thereto, executes various kinds of processing. Used as the program is a program that causes the computer to execute at least a part of operation described in the above-mentioned Embodiments. For example, the control section 401 of the user terminal 20 may be actualized by a control program stored in the memory 1002 to operate in the processor 1001, and the other function blocks may be actualized similarly.

The memory 1002 is a computer-readable storage medium, and for example, may be comprised of at least one of ROM (Read Only Memory), EPROM (Erasable Programmable ROM), EEPROM (Electrically EPROM), RAM (Random Access Memory) and other proper storage media. The memory 1002 may be called the register, cache, main memory (main storage apparatus) and the like. The memory 1002 is capable of storing the program (program code), software module and the like executable to implement the radio communication method according to one Embodiment of the present invention.

The storage 1003 is a computer-readable storage medium, and for example, may be comprised of at least one of a flexible disk, floppy (Registered Trademark) disk, magneto-optical disk (e.g., compact disk (CD-ROM (Compact Disc ROM), etc.), digital multi-purpose disk, Blu-ray (Registered Trademark) disk), removable disk, hard disk drive, smart card, flash memory device (e.g., card, stick, key drive), magnetic stripe, database, server and other proper storage media. The storage 1003 may be called an auxiliary storage apparatus.

The communication apparatus 1004 is hardware (transmitting/receiving device) to perform communication between computers via a wired and/or wireless network, and for example, is also referred to as a network device, network controller, network card, communication module and the like. For example, in order to actualize Frequency Division Duplex (FDD) and/or Time Division Duplex (TDD), the communication apparatus 1004 may be comprised by including a high-frequency switch, duplexer, filter, frequency synthesizer and the like. For example, the transmitting/receiving antenna 101 (201), amplifying section 102 (202), transmitting/receiving section 103 (203), communication path interface 106 and the like as described above may be actualized by the communication apparatus 1004.

The input apparatus 1005 is an input device (e.g., keyboard, mouse, microphone, switch, button, sensor, etc.) that receives input from the outside. The output apparatus 1006 is an output device (e.g., display, speaker, LED (Light Emitting Diode) lamp, etc.) that performs output to the outside. In addition, the input apparatus 1005 and output apparatus 1006 may be an integrated configuration (e.g., touch panel).

Further, each apparatus of the processor 1001, memory 1002 and the like is connected on the bus 1007 to communicate information. The bus 1007 may be comprised of a single bus, or may be comprised of different buses between apparatuses.

Furthermore, each of the radio base station 10 and user terminal 20 may be configured by including hardware such as a microprocessor, Digital Signal Processor (DSP), ASIC (Application Specific Integrated Circuit), PLD (Programmable Logic Device), and FPGA (Field Programmable Gate Array), or a part or the whole of each function block may be actualized by the hardware. For example, the processor 1001 may be implemented by at least one of the hardware.

### (Modification)

In addition, the term explained in the present Description and/or the term required to understand the present Description may be replaced with a term having the same or similar meaning. For example, the channel and/or the symbol may be a signal (signaling). Further, the signal may be a message. The reference signal is capable of being abbreviated as RS (Reference Signal), and according to the standard to apply, may be called a pilot, pilot signal and the like. Furthermore, a component carrier (CC) may be called a cell, frequency carrier, carrier frequency and the like.

Further, the radio frame may be comprised of one or a plurality of frames in the time domain. The one or each of the plurality of frames constituting the radio frame may be called a subframe. Furthermore, the subframe may be comprised of one or a plurality of slots in the time domain. The subframe may be a fixed time length (e.g., 1 ms) that is not dependent on numerology.

Furthermore, the slot may be comprised of one or a plurality of symbols (OFDM (Orthogonal Frequency Division Multiplexing) symbols, SC-FDMA (Single Carrier Frequency Division Multiple Access) symbols and the like) in the time domain. Still furthermore, the slot may be a time unit based on numerology. Moreover, the slot may include a plurality of mini-slots. Each mini-slot may be comprised of one or a plurality of symbols in the time domain. Further, the mini-slot may be called a subslot.

Each of the radio frame, subframe, slot, mini-slot and symbol represents a time unit in transmitting a signal. For the radio frame, subframe, slot, mini-slot and symbol, another name corresponding to each of them may be used. For example, one subframe may be called Transmission Time Interval (TTI), a plurality of contiguous subframes may be called TTI, or one slot or one mini-slot may be called TTI. In other words, the subframe and/or TTI may be the subframe (1 ms) in existing LTE, may be a frame (e.g., 1 to 13 symbols) shorter than 1 ms, or may be a frame longer than 1 ms. In addition, instead of the subframe, the unit representing the TTI may be called the slot, mini-slot and the like.

Herein, for example, the TTI refers to a minimum time unit of scheduling in radio communication. For example, in the LTE system, the radio base station performs scheduling for allocating radio resources (frequency bandwidth, transmit power and the like capable of being used in each user terminal) to each user terminal in a TTI unit. In addition, the definition of the TTI is not limited thereto.

The TTI may be a transmission time unit of a data packet (transport block) subjected to channel coding, code block and/or codeword, or may be a processing unit of scheduling, link adaptation and the like. In addition, when the TTI is given, a time segment (e.g., the number of symbols) to which the transport block, code block and/or codeword is actually mapped may be shorter than the TTI.

In addition, when one slot or one mini-slot is called the TTI, one or more TTIs (i.e., one or more slots, or one or more mini-slots) may be the minimum time unit of scheduling. Further, the number of slots (the number of mini-slots) constituting the minimum time unit of scheduling may be controlled.

The TTI having a time length of 1 ms may be called ordinary TTI (TTI in LTE Rel.8-12), normal TTI, long TTI, ordinary subframe, normal subframe, long subframe or the like. The TTI shorter than the ordinary TTI may be called shortened TTI, short TTI, partial or fractional TTI, shortened subframe, short subframe, mini-slot, subslot or the like.

In addition, the long TTI (e.g., ordinary TTI, subframe, etc.) may be read with TTI having a time length exceeding 1 ms, and the short TTI (e.g., shortened TTI, etc.) may be read with TTI having a TTI length of 1 ms or more and less than the TTI length of the long TTI.

The resource block (RB) is a resource allocation unit in the time domain and frequency domain, and may include one or a plurality of contiguous subcarriers in the frequency domain. Further, the RB may include one or a plurality of symbols in the time domain, and may be a length of 1 slot, 1 mini-slot, 1 subframe, or 1 TTI. Each of 1 TTI and 1 subframe may be comprised of one or a plurality of resource blocks. In addition, one or a plurality of RBs may be called a physical resource block (PRB: Physical RB), subcarrier group (SCG: Sub-Carrier Group), Resource Element Group (REG), PRB pair, RB pair and the like.

Further, the resource block may be comprised of one or a plurality of resource elements (RE: Resource Element). For example, 1 RE may be a radio resource region of 1 subcarrier and 1 symbol.

In addition, structures of the above-mentioned radio frame, subframe, slot, mini-slot, symbol and the like are only illustrative. For example, it is possible to modify, in various manners, configurations of the number of subframes included in the radio frame, the number of slots per subframe or radio frame, the number of mini-slots included in the slot, the numbers of symbols and RBs included in the slot or mini-slot, the number of subcarriers included in the RB, the number of symbols within the TTI, the symbol length, the cyclic prefix (CP) length and the like.

Further, the information, parameter and the like explained in the present Description may be expressed using an absolute value, may be expressed using a relative value from a predetermined value, or may be expressed using another corresponding information. For example, the radio resource may be indicated by a predetermined index. Furthermore, equations using these parameters and the like may be different from those explicitly disclosed in the present Description.

The names used in the parameter and the like in the present Description are not restrictive names in any respects. For example, it is possible to identify various channels (PUCCH (Physical Uplink Control Channel), PDCCH (Physical Downlink Control Channel) and the like) and information elements, by any suitable names, and therefore, various names assigned to these various channels and information elements are not restrictive names in any respects.

The information, signal and the like explained in the present Description may be represented by using any of various different techniques. For example, the data, order, command, information, signal, bit, symbol, chip and the like capable of being described over the entire above-mentioned explanation may be represented by voltage, current, electromagnetic wave, magnetic field or magnetic particle, optical field or photon, or any combination thereof.

Further, the information, signal and the like are capable of being output from a higher layer to a lower layer, and/or from the lower layer to the higher layer. The information, signal and the like may be input and output via a plurality of network nodes.

The input/output information, signal and the like may be stored in a particular place (e.g., memory), or may be managed using a management table. The input/output information, signal and the like are capable of being rewritten, updated or edited. The output information, signal and the like may be deleted. The input information, signal and the like may be transmitted to another apparatus.

Notification of the information is not limited to the Aspects/Embodiments described in the present Description, and may be performed using another method. For example, notification of the information may be performed using physical layer signaling (e.g., Downlink Control Information (DCI), Uplink Control Information (UCI)), higher layer signaling (e.g., RRC (Radio Resource Control) signaling, broadcast information (Master Information Block (MIB), System Information Block (SIB) and the like), MAC (Medium Access Control) signaling), other signals, or combination thereof.

In addition, the physical layer signaling may be called L1/L2 (Layer 1/Layer 2) control information (L1/L2 control signal), L1 control information (L1 control signal) and the like. Further, the RRC signaling may be called RRC message, and for example, may be RRC connection setup (RRC Connection Setup) message, RRC connection reconfiguration (RRC Connection Reconfiguration) message, and the like. Furthermore, for example, the MAC signaling may be notified using MAC Control Element (MAC CE).

Further, notification of predetermined information (e.g., notification of "being X") is not limited to notification that is performed explicitly, and may be performed implicitly (e.g., notification of the predetermined information is not performed, or by notification of different information).

The decision may be made with a value ("0" or "1") expressed by 1 bit, may be made with a Boolean value represented by true or false, or may be made by comparison with a numerical value (e.g., comparison with a predetermined value).

Irrespective of that the software is called software, firmware, middle-ware, micro-code, hardware descriptive term, or another name, the software should be interpreted widely to mean a command, command set, code, code segment, program code, program, sub-program, software module, application, software application, software package, routine, sub-routine, object, executable file, execution thread, procedure, function and the like.

Further, the software, command, information and the like may be transmitted and received via a transmission medium. For example, when the software is transmitted from a website, server or another remote source using wired techniques (coaxial cable, optical fiber cable, twisted pair, Digital Subscriber Line (DSL) and the like) and/or wireless techniques (infrared, microwave and the like), these wired techniques and/or wireless techniques are included in the definition of the transmission medium.

The terms of "system" and "network" used in the present Description are used interchangeably.

In the present Description, the terms of "Base Station (BS)", "radio base station", "eNB", "gNB", "cell", "sector", "cell group", "carrier" and "component carrier" are capable of being used interchangeably. There is the case where the base station is called by the terms of fixed station, NodeB, eNodeB (eNB), access point, transmission point, reception point, femto-cell, small cell and the like.

The base station is capable of accommodating one or a plurality of (e.g., three) cells (also called the sector). When the base station accommodates a plurality of cells, the entire coverage area of the base station is capable of being divided into a plurality of smaller areas, and each of the smaller areas is also capable of providing communication services by a base station sub-system (e.g., small base station (RRH: Remote Radio Head) for indoor use). The term of "cell" or "sector" refers to a part or the whole of coverage area of the base station and/or base station sub-system that performs communication services in the coverage.

In the present Description, the terms of "Mobile Station (MS)", "user terminal", "User Equipment (UE)", and "terminal" are capable of being used interchangeably. There is the case where the base station is called by the terms of fixed station, NodeB, eNodeB (eNB), access point, transmission point, reception point, femto-cell, small cell and the like.

There is the case where the Mobile Station may be called using a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms, by a person skilled in the art.

Further, the radio base station in the present Description may be read with the user terminal. For example, each Aspect/Embodiment of the present invention may be applied to a configuration where communication between the radio base station and the user terminal is replaced with communication among a plurality of user terminals (D2D: Device-to-Device). In this case, the functions that the above-mentioned radio base station 10 has may be the configuration that the user terminal 20 has. Further, the words of "up", "down" and the like may be read with "side". For example, the uplink channel may be read with a side channel.

Similarly, the user terminal in the present Description may be read with the radio base station. In this case, the functions that the above-mentioned user terminal 20 has may be the configuration that the radio base station 10 has.

In the present Description, particular operation performed by the base station may be performed by an upper node thereof in some case. In a network comprised of one or a plurality of network nodes having the base station, it is obvious that various operations performed for communication with the terminal are capable of being performed by the base station, one or more network nodes (e.g., MME (Mobility Management Entity), S-GW (Serving-Gateway) and the like are considered, but the invention is not limited thereto) except the base station, or combination thereof.

Each Aspect/Embodiment explained in the present Description may be used alone, may be used in combination, or may be switched and used according to execution. Further, with respect to the processing procedure, sequence, flowchart and the like of each Aspect/Embodiment explained in the present Description, unless there is a contradiction, the order may be changed. For example, with respect to the methods explained in the present Description, elements of various steps are presented in illustrative order, and are not limited to the presented particular order.

Each Aspect/Embodiment explained in the present Description may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (Registered Trademark) (Global System for Mobile communications), CDMA 2000, UMB (Ultra Mobile Broadband), IEEE 802.11 (Wi-Fi (Registered Trademark)), IEEE 802.16 (WiMAX (Registered Trademark)), IEEE 802.20, UWB (Ultra-WideBand), Bluetooth (Registered Trademark), system using another proper radio communication method and/or the next-generation system extended based thereon.

The description of "based on" used in the present Description does not mean "based on only", unless otherwise specified. In other words, the description of "based on" means both of "based on only" and "based on at least".

Any references to elements using designations of "first", "second" and the like used in the present Description do not limit the amount or order of these elements overall. These designations are capable of being used in the present Description as the useful method to distinguish between two or more elements. Accordingly, references of first and second elements do not mean that only two elements are capable of being adopted, or that the first element should be prior to the second element in any manner.

There is the case where the term of "determining" used in the present Description includes various types of operation. For example, "determining" may be regarded as "determining" calculating, computing, processing, deriving, investigating, looking up (e.g., looking up in a table, database or another data structure), ascertaining and the like. Further, "determining" may be regarded as "determining" receiving (e.g., receiving information), transmitting (e.g., transmitting information), input, output, accessing (e.g., accessing data in memory) and the like. Furthermore, "determining" may be regarded as "determining" resolving, selecting, choosing, establishing, comparing and the like. In other words, "determining" may be regarded as "determining" some operation.

The terms of "connected" and "coupled" used in the present Description or any modifications thereof mean direct or indirect every connection or coupling among two or more elements, and are capable of including existence of one or more intermediate elements between two mutually "connected" or "coupled" elements. Coupling or connection between elements may be physical, may be logical or may be combination thereof. For example, "connection" may be read with "access". In the case of using in the present Description, it is possible to consider that two elements are mutually "connected" or "coupled", by using one or more electric wires, cable and/or print electric connection, and as some non-limited and non-inclusive examples, electromagnetic energy having wavelengths in a radio frequency region, microwave region and/or light (both visible and invisible) region, or the like.

In the present Description or the scope of the claims, in the case of using "including", "comprising" and modifications thereof, as in the term of "provided with", these terms are intended to be inclusive. Further, the term of "or" used in the present Description or the scope of the claims is intended to be not exclusive OR.

As described above, the present invention is described in detail, but it is obvious to a person skilled in the art that the invention is not limited to the Embodiments described in the present Description. The invention is capable of being carried into practice as modified and changed aspects without departing from the subject matter and scope of the invention defined by the descriptions of the scope of the claims. Accordingly, the descriptions of the present Description are intended for illustrative explanation, and do not have any restrictive meaning to the invention.

The disclosure of Japanese Patent Application No. 2016-214689, filed on November 1, 2016, including the specification, drawings, and abstract, is incorporated herein by reference in its entirety.

## Claims

1. An apparatus comprising:
a receiving section that receives beam identification information indicative of a transmission beam; and
a control section that determines a reception beam based on a received reference signal,
wherein the control section acquires a first indicator about a match between the transmission beam and the reception beam.

2. The apparatus according to claim 1, wherein the receiving section receives a second indicator about a match between a transmission beam and a reception beam of another apparatus, and based on the first indicator and the second indicator, the control section determines whether or not to perform transmission using the transmission beam determined based on the received reference signal.

3. The apparatus according to claim 2, wherein in a case where both the first indicator and the second indicator meet a predetermined condition, the control section determines to perform transmission using the transmission beam determined based on the received reference signal.

4. The apparatus according to claim 2 or 3, wherein also in a case where both the first indicator and the second indicator meet a predetermined condition, when predetermined information is notified, the control section determines not to perform transmission using the transmission beam determined based on the received reference signal.

5. A radio communication method in an apparatus, including:
receiving beam identification information indicative of a transmission beam;
determining a reception beam based on a received reference signal; and
acquiring a first indicator about a match between the transmission beam and the reception beam.
